# EUROPEAN PATENT APPLICATION

(11) **EP 4 542 664 A1**
(43) Date of publication of application: **23.04.2025**
(21) Application number: 23842714.0
(22) Date of filing: 13.06.2023
(51) Int. Cl.: H01M 4/13, H01G 11/30, H01M 4/133, H01M 4/587, H01M 4/62, H01M 10/052

(54) **POWER STORAGE ELEMENT**

(30) Priority: 21.07.2022 JP 2022116784
(71) Applicant: GS Yuasa International Ltd., Kisshoin, Minami-ku, Kyoto-shi, Kyoto 601-8520 (JP)
(72) Inventor: UEHARA Naoki, Kyoto-shi, Kyoto 601-8520 (JP)
(74) Representative: Isarpatent
(86) International application number: PCT/JP2023/021819
(87) International publication number: WO 2024/018782

(57) **Abstract**

An energy storage device according to one aspect of the present invention includes: a negative electrode including a negative active material layer; and a positive electrode, in which the negative active material layer contains negative active material particles and a cellulose derivative, an average circularity of the negative active material particles is 0.60 or less, and a peak top molecular weight of the cellulose derivative is 2,800,000 or more.

## Description

### TECHNICAL FIELD

The present invention relates to an energy storage device.

### BACKGROUND ART

Nonaqueous electrolyte secondary batteries typified by lithium ion nonaqueous electrolyte secondary batteries are widely used in electronic devices such as personal computers and communication terminals, motor vehicles, and the like because the batteries are high in energy density. The nonaqueous electrolyte secondary batteries generally include an electrode assembly including a pair of electrodes electrically isolated by a separator, and a nonaqueous electrolyte interposed between the electrodes and are configured to be charged and discharged by transferring charge transport ions between both the electrodes. In addition, capacitors such as lithium ion capacitors and electric double-layer capacitors are also widely in use as energy storage devices except for the nonaqueous electrolyte secondary batteries.

In general, the electrode of the energy storage device has an active material layer containing an active material and a binder. In the prior art, various proposals have been made on binders. For example, for the purpose of suppressing falling off and peeling of a negative active material layer and providing a negative electrode with high productivity, a method for manufacturing a negative electrode for a nonaqueous electrolyte secondary battery has been proposed in which an adjustment step of adjusting a mixture paste using a binder having a glass-transition temperature of 20°C to 40°C, a coating step and a coating film drying step are each performed at a temperature higher by 10°C or more than the glass-transition temperature of the binder (see JP-A-2008-135262).

### PRIOR ART DOCUMENT

### PATENT DOCUMENT

Patent Document 1: JP-A-2008-135262

### SUMMARY OF THE INVENTION

### PROBLEMS TO BE SOLVED BY THE INVENTION

However, in the above-described conventional technique, there is still room for improvement in suppression of falling off of the negative active material layer. In addition, in a situation where demand for a lithium ion secondary battery as an energy source has rapidly increased in recent years, further improvement of a capacity retention ratio after charge-discharge cycles is required.

An object of the present invention is to provide an energy storage device capable of suppressing falling off of a negative active material layer and a decrease in a capacity retention ratio after charge-discharge cycles.

### MEANS FOR SOLVING THE PROBLEMS

An energy storage device according to one aspect of the present invention includes: a negative electrode including a negative active material layer; and a positive electrode, in which the negative active material layer contains negative active material particles and a cellulose derivative, an average circularity of the negative active material particles is 0.60 or less, and a peak top molecular weight of the cellulose derivative is 2,800,000 or more.

### ADVANTAGES OF THE INVENTION

The energy storage device according to one aspect of the present invention can suppress falling off of the negative active material layer and a decrease in the capacity retention ratio after charge-discharge cycles.

### BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

### MODE FOR CARRYING OUT THE INVENTION

First, an outline of an energy storage device disclosed in the present specification will be described.

[1] An energy storage device according to one aspect of the present invention includes: a negative electrode including a negative active material layer; and a positive electrode, in which the negative active material layer contains negative active material particles and a cellulose derivative, an average circularity of the negative active material particles is 0.60 or less, and a peak top molecular weight of the cellulose derivative is 2,800,000 or more.

In the energy storage device according to [1], since the negative active material layer contains the negative active material particles and the cellulose derivative, the average circularity of the negative active material particles is 0.60 or less, and the peak top molecular weight of the cellulose derivative is 2,800,000 or more, the effect of suppressing the falling off of the negative active material layer and the decrease in the capacity retention ratio after charge-discharge cycles is excellent. The reason for this is unknown but is considered as follows. Since the negative active material particles having a low average circularity have a larger contact area between the negative active material particles than the negative active material particles having a high average circularity, it is considered that a conductive path between the negative active material particles is easily secured, and isolation of the negative active material particles is less likely to occur. In the energy storage device according to [1], it is considered that when the average circularity of the negative active material particles is 0.60 or less, the conductivity between the negative active material particles is improved, and as a result, the effect of suppressing the decrease in the capacity retention ratio after the charge-discharge cycles is excellent. Furthermore, it is considered that by using the cellulose derivative having a peak top molecular weight of 2,800,000 or more together with the negative active material particles having a low average circularity in which the contact area between the negative active material particles is large, the adhesion strength between the negative active material particles is specifically increased, the decrease in conductivity between the negative active material particles associated with charge-discharge cycles can be suppressed, and falling off of the negative active material layer can be suppressed. Therefore, the energy storage device according to [1] is excellent in an effect of suppressing falling off of the negative active material layer and a decrease in the capacity retention ratio after charge-discharge cycles.

The "average circularity" is determined by the following procedure. First, a negative electrode including negative active material particles to be measured is fixed with a thermosetting resin. Using an ion milling method (CROSS SECTION POLISHER (registered trademark) manufactured by JEOL Ltd.), a cross section of the negative electrode fixed with a resin is exposed to prepare a measurement sample, and an SEM image is acquired using a scanning electron microscope (SEM). In the measurement of the average circularity, the energy storage device after the initial charge-discharge step is taken as a measurement target. Specifically, a sample to be measured is collected by the following procedure. First, the energy storage device to be measured is discharged at a constant current with a current of 0.1 C until the voltage becomes an end-of-discharge voltage in normal use, so that the energy storage device is brought to a discharged state. Here, the "in normal use" means use of the energy storage device while employing charge-discharge conditions recommended or specified in the energy storage device. Next, the energy storage device in a discharged state is disassembled, the negative electrode is taken out, and a component (electrolyte or the like) adhering to the negative electrode is sufficiently washed with dimethyl carbonate. Thereafter, drying under reduced pressure is performed at room temperature. Operations from disassembly of the energy storage device to acquisition of the SEM image are performed in a dry air atmosphere having a dew point of -40°C or lower. For acquiring an SEM image, JSM-7001F (manufactured by JEOL Ltd.) is used as a scanning electron microscope. For the SEM image, a secondary electron image is observed. The acceleration voltage is 15 kV. The observation magnification is set such that the number of negative active material particles appearing in one field of view is thirty or more and two hundred or less. The obtained SEM image is stored as an image file. In addition, various conditions such as spot diameter, working distance, irradiation current, luminance, and focus are appropriately set so as to make the contour of the negative active material particle clear. With the image analysis software, the area and the outer peripheral length of each projected image of the negative active material particle are measured with respect to the acquired SEM image. The image analysis is performed using image analysis software PopImaging 6.00. The circularity of the negative active material particles is calculated by the following formula. The average value of the circularity calculated for each of the thirty negative active material particles is referred to as "average circularity". Instead of the scanning electron microscope used for acquiring the SEM image and the image analysis software used for measuring the area and the outer peripheral length of the projection image of the negative active material particles, a device and software capable of performing measurement and image analysis equivalent thereto may be used. Circularity = outer peripheral length of perfect circle having the same area as projected image of negative active material particle/outer peripheral length of projected image of negative active material particle

The peak top molecular weight of the cellulose derivative is a value determined by gel permeation chromatography (GPC) measurement in the following procedure. 5 mg of the cellulose derivative to be measured is dissolved in 5 mL of water to obtain a solution. This solution is filtered through a hydrophilic PTFE (polytetrafluoroethylene) membrane filter having a pore size of 0.45 µm, and the filtrate is subjected to GPC measurement. The molecular weight corresponding to the peak of the differential molecular weight distribution curve obtained by GPC measurement is the peak top molecular weight. The GPC measurement conditions are as follows.

### [GPC measurement conditions]

Column/temperature: 2 columns × "OHpak SB-806M HQ", 8.0 mm × 30 cm (Shodex)/40°C
Mobile phase: 0.1 mol/dm³ NaCl aqueous solution
Flow rate: 1.0 mL/min
Injection amount: 100 µL
Detection: differential refractometer (RI)
Column calibration: monodisperse pullulan
Molecular weight calibration: relative calibration method (in terms of pullulan)
Measuring device: dual pump "KP-22-13" (FLOM Corporation), automatic injection device "717 plus" (Nihon Waters K.K.), differential refractive index detector "RI-101" (Shodex)
Analysis software: Empower3 (Nihon Waters K.K.)

Here, the reason why the molecular weight of the cellulose derivative is specified by the peak top molecular weight is described. In preparing the filtrate to be subjected to GPC measurement by the above method, insoluble components in the cellulose derivative may be removed during filtration. Typically, those having a large molecular weight have low solubility in water and tend to be removed during filtration. Therefore, even in a cellulose derivative having the same actual weight average molecular weight, a cellulose derivative having a large number of components having a large molecular weight has more parts to be removed than a cellulose derivative having a small number of components having a large molecular weight, and thus the measured weight average molecular weight is small. On the other hand, in the case of the peak top molecular weight, even if a component having a molecular weight larger than the peak top molecular weight is removed during filtration, the measured peak top molecular weight has the same value, and the influence of filtration on the measured value is small. Therefore, in the present invention in which the effect is exerted by the small molecular weight of the cellulose derivative, it is not appropriate to specify the molecular weight of the cellulose derivative by the weight average molecular weight, and the molecular weight of the cellulose derivative is specified by the peak top molecular weight.

[2] In the energy storage device according to [1], the negative active material layer may not contain a binder, and may contain 0.8% by mass or less of a binder.

According to the energy storage device according to [2], when the negative active material layer does not contain a binder which is an insulator or the content of the binder is 0.8% by mass or less, the conductivity of the negative active material layer is improved, and the effect of suppressing the decrease in the capacity retention ratio after charge-discharge cycles can be further enhanced. The content of the binder is in terms of solid content.

[3] In the energy storage device according to [1] or [2], a content of the cellulose derivative in the negative active material layer may be 0.5% by mass or more and 2.0% by mass or less.

In the energy storage device according to [3], when the content of the cellulose derivative in the negative active material layer is within the above range, the conductivity of the negative active material layer can be further improved. The content of the cellulose derivative is in terms of solid content.

[4] In the energy storage device according to any one of [1] to [3], the negative active material particles may be graphite particles.

According to the energy storage device according to [4], it is possible to provide the energy storage device in which the effect of the present invention is reliably exhibited.

The configuration of an energy storage device, the configuration of an energy storage apparatus, and a method for manufacturing the energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Configuration of energy storage device>

An energy storage device according to an embodiment of the present invention includes: an electrode assembly including a positive electrode, a negative electrode, and a separator; a nonaqueous electrolyte; and a case that houses the electrode assembly and the nonaqueous electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The nonaqueous electrolyte is present to be impregnated in the positive electrode, the negative electrode, and the separator. A nonaqueous electrolyte secondary battery (hereinafter, also referred to simply as "secondary battery") is described as an example of the energy storage device.

### (Negative electrode)

The negative electrode includes a negative substrate and a negative active material layer disposed directly on the negative substrate or over the negative substrate with an intermediate layer interposed therebetween. The negative active material layer is stacked along at least one surface of the negative substrate directly or indirectly with an intermediate layer interposed therebetween.

The negative substrate has conductivity. Whether the positive substrate has "conductivity" or not is determined with the volume resistivity of 10⁷ Ω ·cm measured in accordance with JIS-H-0505 (1970) as a threshold. As the material for the negative substrate, a metal such as copper, nickel, stainless steel, or nickel-plated steel, or an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still preferably 4 µm or more and 25 µm or less, particularly preferably 5 µm or more and 20 µm or less. When the average thickness of the negative substrate falls within the above-described range, it is possible to increase the energy density per volume of the energy storage device while increasing the strength of the negative substrate.

The intermediate layer is a layer disposed between the negative substrate and the negative active material layer. The intermediate layer contains a conductive agent such as carbon particles, thereby reducing contact resistance between the negative substrate and the negative active material layer. The configuration of the intermediate layer is not particularly limited, and includes, for example, a binder and a conductive agent.

The negative active material layer contains negative active material particles and a cellulose derivative.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as components other than negative active material particles, a cellulose derivative, a conductive agent, a binder, and a filler.

The kind of the negative active material can be appropriately selected from known negative active materials. As the negative active material for a lithium ion secondary battery, a material capable of occluding and releasing lithium ions is usually used. Examples of the negative active material include metal Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, graphite and non-graphitic carbon are preferable. In the negative active material layer, one of these materials may be used singly, or two or more thereof may be mixed and used.

The negative active material particles preferably contain graphite particles, and particularly preferably contain spherical graphite obtained by spheroidizing flake graphite. The average circularity of the graphite particles can be adjusted by controlling the conditions of the spheroidizing treatment.

The "graphite" refers to a carbon material in which an average grid spacing (d₀₀₂) of a (002) plane determined by X-ray diffraction before charge-discharge or in a discharged state is 0.33 nm or more and less than 0.34 nm. Examples of the graphite include natural graphite and artificial graphite. From the viewpoint of excellent input/output characteristics, natural graphite is preferable.

The term "non-graphitic carbon" refers to a carbon material in which the average lattice spacing (d₀₀₂) of a (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" of the carbon material such as graphite means a state discharged such that charge carrier ions such as lithium ions that can be occluded and released in association with charge-discharge are sufficiently released from the carbon material that is a negative active material. For example, the "discharged state" refers to a state where the open circuit voltage is 0.7 V or more in a half cell that includes a negative electrode containing a carbon material as a negative active material for use as a working electrode and lithium metal (Li) for use as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The upper limit of the average circularity of the negative active material particles is 0.60, preferably 0.55. When the average circularity of the negative active material particles is the above upper limit or less, the conductivity between the negative active material particles is improved, so that the effect of suppressing the decrease in the capacity retention ratio after the charge-discharge cycles is excellent. On the other hand, the lower limit of the average circularity is preferably 0.40, and more preferably 0.50. When the average circularity of the negative active material particles is the above lower limit or more, it is possible to suppress deterioration of input/output characteristics due to an increase in orientation of the negative active material particles.

The lower limit of the BET specific surface area of the negative active material particles is preferably 0.5 m²/g, and more preferably 2.0 m²/g. When the BET specific surface area is the lower limit or more, the input/output characteristics can be improved. The upper limit of the BET specific surface area is preferably 10.0 m²/g, and more preferably 8.0 m²/g. When the BET specific surface area is the above upper limit or less, decomposition of the nonaqueous electrolyte on the surface of the negative electrode can be suppressed, and a decrease in the capacity retention ratio after charge-discharge cycles can be further suppressed.

The "BET specific surface area" mentioned above is determined by immersing in liquid nitrogen, and measuring the pressure and the amount of adsorption at the time, based on the fact that nitrogen molecules are physically adsorbed on the particle surfaces by supplying a nitrogen gas. As a specific measurement method, the amount of nitrogen adsorption (m²) with respect to the sample is determined by a one-point method. The value obtained by dividing the obtained amount of nitrogen adsorption by a mass (g) of the sample is defined as the BET specific surface area (m²/g).

The median diameter of the negative active material particle is preferably 1.0 µm or more and 50.0 µm or less, and more preferably 3.0 µm or more and 20.0 µm or less. When the median diameter of the negative active material particle is within the above range, manufacturing or handling of the negative active material particles is facilitated, and input/output characteristics are improved.

The "median diameter" of the negative active material particles means a value (D50) at which the volume-based integrated distribution calculated in accordance with JIS-Z-8819-2 (2001) becomes 50 %. Specifically, the measured value is obtained by the following method. A laser diffraction type particle size distribution measuring device ("SALD-2200" manufactured by Shimadzu Corporation) is used as a measuring device, and Wing SALD-2200 is used as measurement control software. A scattering measurement mode is employed, and a wet cell, in which a dispersion liquid with a measurement sample dispersed in a dispersion solvent circulates, is irradiated with a laser beam to obtain a scattered light distribution from the measurement sample. Then, the scattered light distribution is approximated with a log-normal distribution, and a particle size corresponding to an accumulation degree of 50% is defined as a median diameter (D50). Further, it has been confirmed that the median diameter based on the above measurement is almost equal to the median diameter measured by extracting one hundred particles from the SEM image, excluding extremely large particles and extremely small particles.

In the present invention, in the measurement of the median diameter and the BET specific surface area, the energy storage device after the above-mentioned initial charge-discharge step is measured.

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the negative active material particles in the negative active material layer is preferably 90.0% by mass or more and 99.5% by mass or less, and more preferably 95% by mass or more and 99.0% by mass or less. The content of the negative active material particles falls within the range mentioned above, thereby allowing a balance to be achieved between the increased energy density and manufacturability of the negative active material layer.

The negative active material layer contains a cellulose derivative. The cellulose derivative is usually a component that functions as a thickener when a negative active material layer is formed by coating a negative composite paste or the like.

The cellulose derivative is a compound having a structure in which at least some of hydrogen atoms of hydroxy groups of cellulose are substituted with other groups. Examples of the cellulose derivative include carboxyalkyl celluloses (carboxymethyl cellulose (CMC), carboxyethyl cellulose, and carboxypropyl cellulose and the like), alkyl celluloses (methyl cellulose and ethyl cellulose and the like), hydroxyalkyl celluloses (hydroxyethyl cellulose, hydroxypropyl cellulose, hydroxyethyl methyl cellulose, and hydroxypropyl methyl cellulose and the like), cellulose acetate phthalate, hydroxypropyl methyl cellulose phthalate, and acetyl cellulose. Among these, carboxyalkyl cellulose is preferable, and CMC is more preferable. The cellulose derivatives may be used singly, or two or more thereof may be mixed and used.

A part or all of the cellulose derivative may exist in a salt state. Examples of the counter cation of the cellulose derivative when the cellulose derivative is present in a salt state include a sodium ion, a magnesium ion, a lithium ion, and an ammonium ion.

The lower limit of the peak top molecular weight of the cellulose derivative is 2,800,000, preferably 3,000,000. When the peak top molecular weight of the cellulose derivative is the above lower limit or more, the adhesion strength between the negative active material particles is increased, and falling off of the negative active material layer can be suppressed. On the other hand, the upper limit of the peak top molecular weight of the cellulose derivative is preferably 4,000,000, and more preferably 3,500,000. When the peak top molecular weight of the cellulose derivative is the above upper limit or less, solubility in water can be improved.

When the cellulose derivative is carboxyalkyl cellulose, the lower limit of the degree of etherification of the cellulose derivative is preferably 0.60, more preferably 0.63, and still preferably 0.65. The upper limit of the degree of etherification is preferably 1.00, more preferably 0.95, and still preferably 0.90. By setting the degree of etherification of the cellulose derivative within the above range, the adhesion strength between the negative active material particles can be improved in the negative active material layer while reducing the cellulose derivative that is not dissolved in a dispersion medium such as water in the negative composite paste. The degree of etherification of the cellulose derivative is calculated by measuring the degree of substitution of a carboxyalkyl group bonded per anhydroglucose unit as alkalinity or acidity.

When the cellulose derivative is soluble in water, such as carboxyalkyl cellulose, the lower limit of the viscosity of the aqueous solution of the cellulose derivative is preferably 2000 mPa ·s, and more preferably 3000 mPa ·s. When the viscosity of the aqueous solution of the cellulose derivative is the above lower limit or more, the adhesion strength between the negative active material particles in the negative active material layer containing such a cellulose derivative is increased, and falling off of the negative active material layer can be suppressed. On the other hand, the upper limit of the viscosity of the aqueous solution of the cellulose derivative is preferably 10,000 mPa ·s, and more preferably 8000 mPa ·s. When the viscosity of the aqueous solution of the cellulose derivative is the above upper limit or less, solubility in a dispersion medium such as water can be improved. The "viscosity of an aqueous solution of a cellulose derivative" is a value obtained by measuring the viscosity of a 2% by mass aqueous solution of a cellulose derivative at 20°C with a B-type viscometer.

The lower limit of the content of the cellulose derivative in the negative active material layer is preferably 0.5% by mass, and more preferably 0.6% by mass. When the content of the cellulose derivative is the above lower limit or more, adhesion between the negative active material particles can be maintained, so that conductivity between the negative active material particles can be further improved. On the other hand, the upper limit of the content of the cellulose derivative is preferably 2.0% by mass, and more preferably 1.5% by mass. When the content of the cellulose derivative is the above upper limit or less, deterioration of input/output characteristics can be suppressed.

The negative active material layer does not contain a binder, or preferably contains 0.8% by mass or less, more preferably 0.6% by mass or less of a binder. When the negative active material layer does not contain a binder which is an insulator or the content of the binder is the lower limit or less, the conductivity of the negative active material layer is improved, and the effect of suppressing the decrease in the capacity retention ratio after charge-discharge cycles can be further enhanced.

Examples of the binder mentioned above include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The negative active material layer can contain a filler as necessary. The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The content of the filler in the negative active material layer may be, for example, 0.1% by mass or more and 8% by mass or less, or may be 0.5% by mass or more and 5% by mass or less. The content of the filler in the negative active material layer may be 3% by mass or less, or may be 1% by mass or less, and the filler may not be contained in the negative active material layer.

The negative active material layer may not contain a conductive agent. Carbon materials such as the graphite, easily graphitizable carbon, and hardly graphitizable carbon exemplified as the negative active material, and metals or semimetals such as metal Li; Si and Sn also have conductivity, but carbon materials such as the graphite, easily graphitizable carbon, and hardly graphitizable carbon, and metals or semimetals such as metal Li; Si and Sn are not contained in the conductive agent in the negative active material layer. In the energy storage device, since the isolation of the negative active material particles hardly occurs, conductivity can be secured even when the negative active material layer does not contain a conductive agent. In addition, since the negative active material layer does not contain a conductive agent, the BET specific surface area of the negative active material layer is reduced, and the decomposition of the nonaqueous electrolyte on the surface of the negative electrode can be suppressed, so that the decrease in the capacity retention ratio of the energy storage device after charge-discharge cycles can be further suppressed.

### (Positive electrode)

The positive electrode has a positive substrate and a positive active material layer disposed directly on the positive substrate or over the positive substrate with an intermediate layer interposed therebetween. The configuration of the intermediate layer is not particularly limited, and for example, can be selected from the configurations exemplified for the negative electrode.

The positive substrate has conductivity. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 µm or more and 50 µm or less, more preferably 5 µm or more and 40 µm or less, still preferably 8 µm or more and 30 µm or less, particularly preferably 10 µm or more and 25 µm or less. The average thickness of the positive substrate falls within the range mentioned above, thereby allowing the energy density per volume of the energy storage device to be increased while increasing the strength of the positive substrate.

The positive active material layer includes a positive active material. The positive active material layer contains optional components such as a conductive agent, a binder (binding agent), a thickener, a filler, or the like as necessary.

The positive active material can be appropriately selected from known positive active materials. As a positive active material for a lithium ion secondary battery, a material capable of storing and releasing lithium ions is normally used. Examples of the positive active material include lithium transition metal composite oxides that have an α-NaFeO₂-type crystal structure, lithium transition metal oxides that have a spinel-type crystal structure, polyanion compounds, chalcogenides, and sulfur. Examples of the lithium transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < y < 1, 0 < 1-x-y), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < y < 1, 0 < 1-x-y), Li[LiₓNi_{γ}Mn_{β}Co_{(1-x-γ-β)}]O₂ (0 ≤ x < 0.5, 0 < y, 0 < B, 0.5 < y + β < 1, 0 < 1-x-γ-β), and Li[LiₓNi_{γ}Co_{β}Al_{(1-x-γ-β})]O₂ (0 ≤ x < 0.5, 0 < y, 0 < B, 0.5 < y + β < 1, 0 < 1-x-γ-β). Examples of the lithium-transition metal composite oxides having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used singly, or two or more thereof may be mixed and used.

The positive active material is typically particles (powder). The median diameter of the positive active material is preferably, for example, 0.1 µm or more and 20 µm or less. By setting the median diameter of the positive active material to be equal to or greater than the lower limit, the positive active material is easily manufactured or handled. By setting the median diameter of the positive active material to be equal to or less than the upper limit, the electron conductivity of the positive active material layer is improved. It is to be noted that in the case of using a composite of the positive active material and another material, the median diameter of the composite is regarded as the median diameter of the positive active material. A crusher, a classifier, or the like is used in order to obtain a powder with a predetermined particle size. A crushing method and a classification method can be selected from, for example, the methods exemplified for the negative electrode.

The content of the positive active material in the positive material layer is preferably 50% by mass or more and 99% by mass or less, more preferably 70% by mass or more and 98% by mass or less, still preferably 80% by mass or more and 95% by mass or less. When the content of the positive active material falls within the range mentioned above, a balance can be achieved between the increased energy density and manufacturability of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a composite material of carbon black and CNT may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. The content of the conductive agent falls within the range mentioned above, thereby allowing the energy density of the energy storage device to be increased.

The binder can be selected from the materials exemplified for the negative electrode. The content of the binder in the positive active material layer is preferably 1% by mass or more and 10% by mass or less, more preferably 3% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler can be selected from the materials exemplified for the negative electrode.

The positive active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Nb, and W as a component other than the positive active material, the conductive agent, the binder, the thickener, and the filler.

### (Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or complexes of these substances may be used alone, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these examples, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these salts, the inorganic lithium salts are preferable, and LiPF₆ is more preferable.

The content of the electrolyte salt in the nonaqueous electrolyte solution is, under 1 atm at 20°C, preferably 0.1 mol/dm³ or more and 2.5 mol/dm³ or less, more preferably 0.3 mol/dm³ or more and 2.0 mol/dm³ or less, still preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be mixed and used.

The content of the additive included in the nonaqueous electrolyte solution is preferably 0.01% by mass or more and 10% by mass or less, more preferably 0.1% by mass or more and 7% by mass or less, still preferably 0.2% by mass or more and 5% by mass or less, particularly preferably 0.3% by mass or more and 3% by mass or less, with respect to the total mass of the nonaqueous electrolyte solution. The content of the other additives falls within the range mentioned above, thereby making it possible to improve capacity retention performance or cycle performance after high-temperature storage, and further improve the safety.

For the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium, and calcium. Examples of the solid electrolyte include a sulfide solid electrolyte, an oxide solid electrolyte, a nitride solid electrolyte, a polymer solid electrolyte, and a gel polymer electrolyte.

Examples of the sulfide solid electrolytes include, in the case of a lithium ion secondary battery, Li₂S-P₂S₅, LiI-Li₂S-P₂S₅, and Li₁₀Ge-P₂S₁₂.

The shape of the energy storage device according to the present embodiment is not particularly limited, and examples thereof include cylindrical batteries, prismatic batteries, flat batteries, coin batteries, and button batteries.

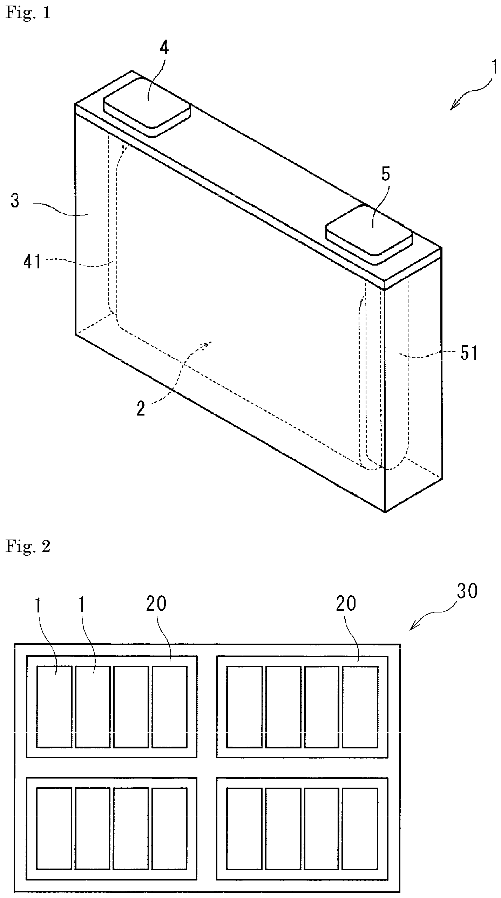

Fig. 1 shows an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Configuration of energy storage apparatus>

The energy storage device according to the present embodiment can be mounted as an energy storage unit (battery module) configured with a plurality of energy storage devices assembled, on power sources for automobiles such as electric vehicles (EVs), hybrid vehicles (HEVs), and plug-in hybrid vehicles (PHEVs), power sources for electronic devices such as personal computers and communication terminals, power sources for power storage, or the like. In this case, the technique of the present invention may be applied to at least one energy storage device included in the energy storage unit.

Fig. 2 shows an example of an energy storage apparatus 30 formed by assembling energy storage units 20 in each of which two or more electrically connected energy storage devices 1 are assembled. The energy storage apparatus 30 may include a busbar (not illustrated) for electrically connecting two or more energy storage devices 1, or a busbar (not illustrated) for electrically connecting two or more energy storage units 20, and the like. The energy storage unit 20 or the energy storage apparatus 30 may include a state monitor (not shown) that monitors the state of one or more energy storage devices 1.

### <Method for manufacturing energy storage device>

A method for manufacturing the energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween. The positive electrode can be obtained by directly stacking the positive active material layer on a positive substrate or stacking the positive composite layer on the positive substrate with an intermediate layer interposed therebetween. The positive active material layer is stacked by applying a positive composite paste to the positive substrate. The negative electrode can be obtained by directly stacking the negative active material layer on a negative substrate or stacking the negative active material layer on the negative substrate with an intermediate layer interposed therebetween as with the positive electrode. The negative active material layer is stacked by applying a negative composite paste containing negative active material particles and a cellulose derivative to the negative substrate. The positive composite paste and the negative composite paste may contain a dispersion medium. As the dispersion medium, it is possible to use, for example, an aqueous solvent such as water or a mixed solvent mainly composed of water or an organic solvent such as N-methylpyrrolidone or toluene.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed. The details of the respective elements configuring the energy storage device obtained by the manufacturing method are as described above.

### <Other embodiments>

It is to be noted that the electrolyte energy storage device according to the present invention is not limited to the embodiment mentioned above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, size, and capacity and the like of the energy storage device are arbitrary. The present invention can also be applied to capacitors such as various secondary batteries, electric double-layer capacitors, or lithium ion capacitors.

While the electrode assembly with the positive electrode and the negative electrode stacked with the separator interposed therebetween has been described in the embodiment mentioned above, the electrode assembly does not have to include the separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to examples. The present invention is not limited to the following examples.

### [Example 1]

### (Negative electrode)

Negative active material particles composed of natural graphite A as a negative active material, sodium carboxymethylcellulose (CMC-A) as a cellulose derivative, and water as a dispersion medium were mixed to prepare a negative composite paste. The mass ratio of the negative active material particles and CMC-A was 99 : 1 in terms of solid content. Then, the negative composite paste was applied onto one surface of a copper foil having an average thickness of 20 µm as a negative substrate, and then dried and pressed to form a negative active material layer, thereby obtaining a negative electrode of Example 1. The peak top molecular weight in CMC-A in which the counter cation was a sodium ion was 3,180,000, the viscosity of the aqueous solution was 6940 mPa ·s, and the degree of etherification was 0.65-0.75.

### (Fabrication of energy storage device)

Next, the negative electrode was used as a working electrode, the metal Li was used as a counter electrode, the electrodes were opposed to each other with a polyethylene separator interposed therebetween, and a half cell was made by filling with a nonaqueous electrolyte to obtain an energy storage device of Example 1. As the nonaqueous electrolyte, a solution obtained by dissolving LiPF₆ at a concentration of 1.0 mol/dm³ in a solvent obtained by mixing ethylene carbonate, dimethyl carbonate, and ethyl methyl carbonate at a volume ratio of 30 : 35 : 35 was used.

### [Example 2 and Comparative Examples 1 to 6]

Each energy storage device of Example 2 and Comparative Example 1 to Comparative Example 6 was obtained similarly to Example 1 except that the negative active material particles used for preparing the negative electrode, the kind and content of the cellulose derivative, and the content of the binder were as shown in Table 1. Styrene-butadiene rubber was used as the binder in Example 2, Comparative Example 3, Comparative Example 4, and Comparative Example 6.

### [Evaluation]

### (Capacity retention ratio after charge-discharge cycles)

### (1) Initial charge-discharge

### (Initial charge-discharge)

The obtained respective energy storage devices were subjected to initial charge-discharge under the following conditions. In the following description, a step of inserting lithium ions, which are charge transport ions, into the negative active material is referred to as "charge", and a step of extracting lithium ions from the negative active material is referred to as "discharge", since the evaluation is performed using the negative electrode as a working electrode. At 25°C, constant current charge was performed with a charge current of 1.0 C and an end-of-charge voltage of 0.02 V, and then constant voltage charge was performed at 0.02 V. With regard to the charge termination conditions, the charge was performed until the charge current reached 0.01 C. Thereafter, a pause time of 10 minutes was provided. Thereafter, constant current discharge was performed with a discharge current of 0.1 C and an end-of-discharge voltage of 2.0 V, and then a pause period of 10 minutes was provided. This charge-discharge was performed 3 cycles.

### (2) Charge-discharge cycle test

Next, the following charge-discharge cycle test was performed. Each energy storage device was stored in a thermostatic bath at 25°C for 1 hour, charged at a constant current of 1.0 C to 0.02 V, and then charged at a constant voltage of 0.02 V until the charge current reached 0.01 C. Thereafter, a pause time of 10 minutes was provided. Thereafter, constant current discharge was performed up to 2.0 V at a discharge current of 1.0 C, and a pause of 10 minutes was provided. With these charging and discharging steps as one cycle, this cycle was performed for 3 cycles, and the discharge current was changed to 2.0 C, 3.0 C, 4.0 C, and 1.0 C for 1 cycle each, for a total of 7 cycles. The charging, discharging and pausing were performed in a thermostatic bath at 25°C. Then, the percentage of the discharge capacity at the seventh cycle to the discharge capacity at the first cycle was obtained as a capacity retention ratio [%] after the charge-discharge cycles.

### (Falling-off rate of negative active material layer)

5 sheets of each negative electrode after pressing were punched into a circle, placed in a polypropylene cup, and vibrated with a test tube mixer at a rotation speed of 1120 rpm for 5 minutes. Then, the ratio (%) of the mass of the negative electrode reduced after vibration to the mass of the negative electrode before vibration was obtained as the falling-off rate of the negative active material layer.

Table 1 shows the capacity retention ratio after charge-discharge cycles and the falling-off rate of the negative active material layer in each of Examples and Comparative Examples. The values of the BET specific surface area, the median diameter, and the average circularity of the negative active material obtained by the above procedure and method for the negative electrode taken out from the energy storage device after the charge-discharge cycles in each of Examples and Comparative Examples are also shown in Table 1.

**[Table 1]**

| | Negative active material particles | | | | | Cellulose derivative | | | | | | Binder | Evaluation | |
|---|---|---|---|---|---|---|---|---|---|---|---|---|---|---|
| | Type | BET specific surface area [m²/g] | Median diameter [µm] | Average circularity | Content [% by mass] | Type | Peak top molecular weight | Counter cation | Viscosity of aqueous solution [mPa · s] | Degree of etherification | Content [% by mass] | Content [% by mass] | Capacity retention ratio after charge-discharge cycles [%] | Falling-off rate of negative active material layer [%] |
| Example 1 | Natural graphite A | **6.3** | **9.7** | **0.54** | **99** | **CMC-A** | **3,180,000** | Sodium ion | **6940** | **0.65-0.75** | **1** | **0** | **98.8** | **2.5** |
| Example 2 | Natural graphite A | **6.3** | **9.7** | **0.54** | **98** | **CMC-A** | **3,180,000** | Sodium ion | **6940** | **0.65-0.75** | **1** | **1** | **95.8** | **0.9** |
| Comparative Example 1 | Natural graphite A | **6.3** | **9.7** | **0.54** | **99** | **CMC-B** | **2,520,000** | Sodium ion | **1950** | **0.91** | **1** | **0** | **98.4** | **5.7** |
| Comparative Example 2 | Natural graphite A | **6.3** | **9.7** | **0.54** | **99** | **CMC-C** | **280,000** | Ammonium ion | **493** | **0.50-0.60** | **1** | **0** | **97.2** | **6.8** |
| Comparative Example 3 | Natural graphite A | **6.3** | **9.7** | **0.54** | **98** | **CMC-B** | **2,520,000** | Sodium ion | **1950** | **0.91** | **1** | **1** | **90.6** | **2.0** |
| Comparative Example 4 | Natural graphite A | **6.3** | **9.7** | **0.54** | **98** | **CMC-C** | **280,000** | Ammonium ion | **493** | **0.50-0.60** | **1** | **1** | **88.7** | **2.8** |
| Comparative Example 5 | Natural graphite B | **4.8** | **6.4** | **0.71** | **99** | **CMC-A** | **3,180,000** | Sodium ion | **6940** | **0.65-0.75** | **1** | **0** | **80.4** | **50.0** |
| Comparative Example 6 | Natural graphite B | **4.8** | **6.4** | **0.71** | **98** | **CMC-A** | **3,180,000** | Sodium ion | **6940** | **0.65-0.75** | **1** | **1** | **77.4** | **3.0** |

As shown in Table 1, in each of the energy storage devices of Example 1 and Example 2 in which the average circularity of the negative active material particles was 0.60 or less and the peak top molecular weight of the cellulose derivative was 2,800,000 or more, the capacity retention ratio after charge-discharge cycles was 95% or more, and the falling-off rate of the negative active material layer was 2.5% or less, and good results were obtained. Comparison between Example 1 and Example 2 shows that when the negative active material layer does not contain a binder or the content of the binder is 0.8% by mass or less, the effect of suppressing a decrease in the capacity retention ratio after charge-discharge cycles is enhanced.

On the other hand, in Comparative Example 1 and Comparative Example 2 in which the average circularity of the negative active material particles is 0.60 or less, but the peak top molecular weight of the cellulose derivative is less than 2,800,000, since the negative active material layer did not contain a binder, the effect of suppressing the decrease in the capacity retention ratio after the charge-discharge cycles was enhanced, but the falling-off rate of the negative active material layer was increased. In Comparative Example 3 and Comparative Example 4 in which the average circularity of the negative active material particles was 0.60 or less, but the peak top molecular weight of the cellulose derivative was less than 2,800,000, since the content of the binder was more than 0.8% by mass, the falling-off rate of the negative active material layer was good, but the effect of suppressing the decrease in the capacity retention ratio after the charge-discharge cycles was deteriorated.

In Comparative Example 5 in which the peak top molecular weight of the cellulose derivative was 2,800,000 or more, but the average circularity of the negative active material particles exceeded 0.60, since the negative active material layer did not contain a binder, the effect of suppressing the decrease in the capacity retention ratio after the charge-discharge cycles was reduced and the falling-off rate of the negative active material layer was increased very much. In Comparative Example 6 in which the peak top molecular weight of the cellulose derivative was 2,800,000 or more, but the average circularity of the negative active material particles was more than 0.60, since the content of the binder was more than 0.8% by mass, the falling-off rate of the negative active material layer was good, but the effect of suppressing the decrease in the capacity retention ratio after the charge-discharge cycles was greatly reduced.

As described above, it was shown that the energy storage device can suppress falling off of the negative active material layer and a decrease in the capacity retention ratio after charge-discharge cycles.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. An energy storage device comprising:
a negative electrode including a negative active material layer; and
a positive electrode, wherein
the negative active material layer contains negative active material particles and a cellulose derivative,
an average circularity of the negative active material particles is 0.60 or less, and
a peak top molecular weight of the cellulose derivative is 2,800,000 or more.

2. The energy storage device according to claim 1, wherein the negative active material layer does not contain a binder or contains 0.8% by mass or less of a binder.

3. The energy storage device according to claim 1 or 2,
wherein a content of the cellulose derivative in the negative active material layer is 0.5% by mass or more and 2.0% by mass or less.

4. The energy storage device according to claim 1 or 2,
wherein the negative active material particles are graphite particles.
